# EUROPÄISCHE PATENTSCHRIFT

(11) **EP 2 148 156 B1**
(45) Veröffentlichungstag und Bekanntmachung des Hinweises auf die Patenterteilung: **11.09.2019**
(21) Anmeldenummer: 09165861.7
(22) Anmeldetag: 20.07.2009
(51) Int. Cl.: F25D 23/06, B29C 44/18, B29C 44/38, B29C 44/60

(54) **Verfahren zum Ausschäumen eines Hohlkörpers**
Method for foaming a hollow body
Procédé de moussage d'un corps creux

(30) Priorität: 22.07.2008 DE 102008040598
(43) Veröffentlichungstag der Anmeldung: 27.01.2010
(73) Patentinhaber: BSH Hausgeräte GmbH, 81739 München (DE)
(72) Erfinder: Lanzinger, Jürgen, 89160 Dornstadt (DE)

(56) Entgegenhaltungen:
- US-A- 3 446 881
- US-A- 5 318 734
- US-A1- 2005 055 973

## Beschreibung

Die vorliegende Erfindung betrifft ein Verfahren zum Ausschäumen eines Hohlkörpers, insbesondere eines Hausgerätegehäuses. Hausgeräte, insbesondere Kältegeräte, haben herkömmlicherweise ein wärmeisolierendes Gehäuse, das zunächst als Hohlkörper aus festen Außen- und Innenwandteilen zusammengefügt und dann im Inneren mit Schaum ausgefüllt wird, um eine gute Wärmeisolationswirkung zu erzielen. Das Ausfüllen mit Schaum erfolgt, indem in einer Einspritzdüse zwei Komponenten eines Schaumbildners, üblicherweise ein Isocyanat und ein Polyol/Pentangemisch zusammengebracht und gemeinsam durch eine Einlassöffnung in den Hohlkörper eingespritzt werden. Um eine möglichst vollständige und lunkerfreie Ausschäumung zu erzielen, wird der Schaumbildner mit hoher Geschwindigkeit eingespritzt, so dass er in einer Anfangsphase des Ausschäumens, in der der Hohlkörper noch im Wesentlichen leer ist, bis zu einem Auftreffpunkt an einer von der Einlassöffnung entfernten Wand des Hohlkörpers fliegt. Von diesem Auftreffpunkt breitet sich der sich bildende Schaum aus, wobei er gleichzeitig aushärtet. Die Aushärtung der Schaumfront kann dazu führen, dass kleine lokale Querschnittsverengungen des Hohlkörpers die Schaumausbreitung erheblich beeinträchtigen. Wenn ein Teil des Hohlkörpers schaumfrei bleibt, ist die Isolationswirkung mangelhaft. Ein solcher Fehler ist nachträglich kaum wirtschaftlich behebbar, so dass ein mangelhaft ausgeschäumtes Gehäuse in der Regel verworfen werden muss.

Um eine Aushärtung der Schaumfront während des Einspritzens zu verhindern, wäre es an sich wünschenswert, die zum Ausschäumen des Hohlkörpers benötigte Schaumbildnermenge in möglichst kurzer Zeit einzuspritzen. Dabei tritt jedoch das Problem auf, dass ein scharfer Strahl des noch nicht expandierten Schaumbildners im Vergleich zum sich im Hohlraum ausbreitenden Schaum eine hohe Durchschlagskraft hat, so dass der Strahl dazu neigt, eine der Einlassöffnung entgegen wachsende Schaumfront zu durchschlagen. Das Material an der Oberfläche der Schaumfront wird daher nicht erneuert und kann aushärten. Um zu expandieren, muss das frisch eingespritzte Schaumbildnermaterial die aushärtende Schaumfront durchbrechen, was eine ungleichmäßige Ausbildung des Schaums und Lunkerbildung begünstigt.

Aus US 2005/055973 A1 ist ein isolierendes Wandpaneel für den Hausbau bekannt, das gefertigt wird, indem ein Hohlraum zwischen zwei Platten ausgeschäumt wird, indem eine Einspritzdüse Schaumbildner über eine Öffnung in einer ersten der Platten einspritzt und dabei hin und hergeschwenkt wird, um den Schaumbildner auf der gegenüberliegenden zweiten Platte zu verteilen. Aus der Schwenkbewegung resultiert eine veränderliche Länge der Flugbahn des Schaumbildners bis zur zweiten Platte. Um das Wandpaneel auf seiner gesamten Fläche auszuschäumen, muss der Vorgang an einer Vielzahl von Öffnungen der ersten Platte vorgenommen werden, was die Verwendung einer Mehrzahl von Einspritzdüsen oder die sukzessive Platzierung einer Einspritzdüse an mehreren Öffnungen erfordert.

Aufgabe der vorliegenden Erfindung ist, ein Verfahren zum Ausschäumen eines Hohlkörpers anzugeben, das eine gleichmäßige Ausschäumung auch eines mitunter kompliziert geformten Hohlkörpers, insbesondere eines langen, schmalen Hohlraums, in einem ununterbrochenen Vorgang ermöglicht.

Die Aufgabe wird gelöst, indem bei einem Verfahren mit den Schritten
a) Platzieren einer Einspritzdüse an einer Einlassöffnung des Hohlkörpers;
b) Einspritzen eines Schaumbildners in den Hohlkörper mit Hilfe der Einspritzdüse, wobei die Flugweite des Schaumbildners von der Einspritzdüse bis zu einem Auftreffpunkt an einer Innenwand des Hohlkörpers während des Einspritzens reduziert wird;
c) Expandierenlassen des eingespritzten Schaumbildners
zum Reduzieren der Flugweite des Schaumbildners dessen Austrittsgeschwindigkeit an der Einspritzdüse reduziert wird. Auf diese Weise kann ein Durchschlagen der der Einspritzöffnung entgegen wachsenden Schaumfront vermieden werden, und der frisch eingespritzte Schaumbildner ist nicht durch umgebendes, bereits teilweise ausgehärtetes Schaummaterial am Expandieren gehindert.

Die Reduzierung der Austrittsgeschwindigkeit lässt sich auf einfache Weise durch eine hinsichtlich ihres Öffnungsquerschnitts veränderbare Einspritzdüse, die dann bevorzugter Weise als federbelastete Düse ausgebildet ist, erreichen. Zum einen ist die Austrittsgeschwindigkeit präziser steuerbar als der Auftreffpunkt des Strahls an einer Wand eines in der Praxis meist langen, schmalen Hohlraums, zum anderen bietet die Veränderung der Austrittsgeschwindigkeit die Möglichkeit, diese zu Beginn des Einspritzvorgangs, wenn noch keine Aushärtung einer der Einlassöffnung entgegen wachsenden Schaumfront eingesetzt hat, den Schaumbildner mit hoher Austrittsgeschwindigkeit und dementsprechend hohem Volumenstrom einzuspritzen, um dadurch die Dauer des Einspritzvorgangs zu verkürzen.

Der auszuschäumende Querschnitt eines Hohlkörpers wie etwa eines Kältegerätgehäuses ist meist in Einspritzrichtung z. B. durch eingebrachte Zwischenböden veränderlich. Um eine gleichmäßige Ausschäumung unabhängig von der jeweiligen Querschnittsfläche zu erreichen, ist es zweckmäßig, an einem Auftreffpunkt, in dessen Umgebung ein auszuschäumender Querschnitt des Hohlraums klein ist, die Rate, mit der die Flugweite verringert wird, größer zu wählen als an einem Auftreffpunkt, in dessen Umgebung sich ein großer auszuschäumender Querschnitt befindet.

Derartig veränderliche Querschnitte können sich in der Praxis insbesondere dadurch ergeben, dass der Hohlkörper einen in Flugrichtung des Schaumbildners lang gestreckten ersten Teilraum wie etwa das Innere einer Rückwand und von Seitenwänden des Kältegerätegehäuses und wenigstens einen in den ersten Teilraum einmündenden, quer zur Flugrichtung ausgedehnten zweiten Teilraum wie etwa eine Decke, einen Boden oder eine horizontale Zwischenwand aufweist, wobei dann die Rate, mit der die Flugweite verringert wird, bei einem in Höhe des zweiten Teilraums liegenden Auftreffpunkt niedriger ist als an einem nicht in Höhe des zweiten Teilraums liegenden Auftreffpunkt.

Wenn der Hohlkörper eine innere Engstelle aufweist, sollte der Auftreffpunkt in einer Anfangsphase des Einspritzens jenseits der Engstelle und in einer Endphase des Einspritzens zwischen der Engstelle und der Einlassöffnung liegen, um eine gleichmäßige Ausschäumung sowohl des jenseits der Engstelle liegenden Teils des Hohlkörpers als auch des diesseits liegenden Teils zu gewährleisten.

Indem der Auftreffpunkt des Schaumbildners vor einer Front des in dem Hohlkörper expandierenden Schaums gehalten wird, kann vermieden werden, dass der eingespritzte Schaumbildner die Front durchschlägt und von dieser in seiner Expansion behindert wird. Besonders günstig ist die Einlassöffnung bei einem Haushaltskältegerät gewählt, wenn diese zumindest annähernd gegenüberliegend zur Decke des Haushaltskältegerätegehäuses angeordnet ist.

Weitere Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch ein Kältegerätegehäuse vor dem Ausschäumen;
- Fig. 2: den Beginn des Ausschäumens des Kältegerätegehäuses;
- Fig. 3: einen weiteren Schnitt durch das Kältegerätegehäuse in einer Anfangsphase des Ausschäumens;
- Fig. 4: einen weiteren Schnitt in einer fortgeschritteneren Phase des Ausschäumens; und
- Fig. 5: einen typischen zeitlichen Verlauf der Einspritzgeschwindigkeit des Schaumbildners während des Ausschäumens.

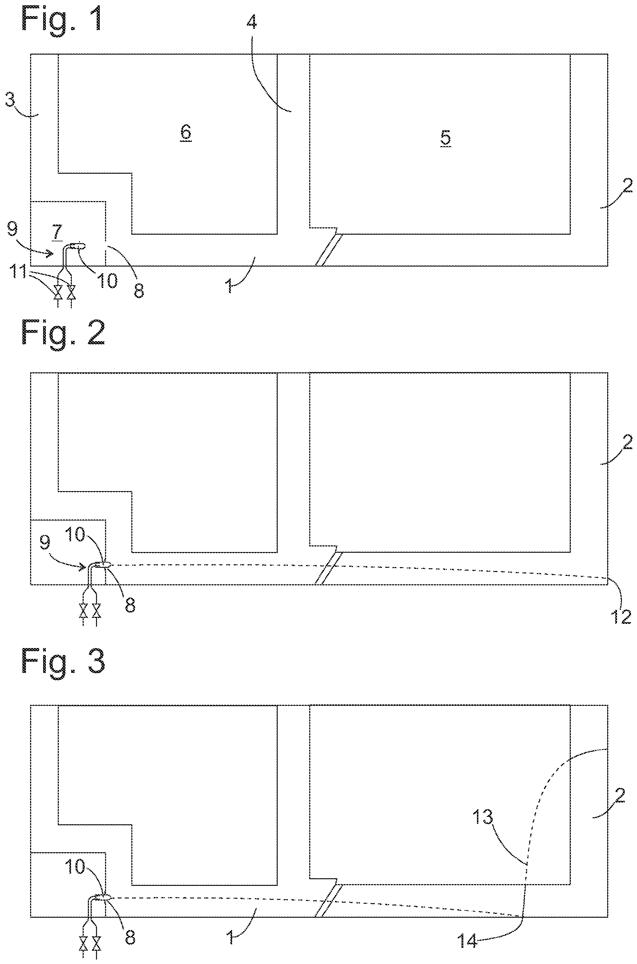

Fig. 1 zeigt einen schematischen Schnitt durch ein Gehäuse eines Kombinations-Kältegeräts vor dem Ausschäumen. Das Gehäuse ist in einer liegenden Orientierung gezeigt, in der auch das Ausschäumen durchgeführt wird. Der Schnitt verläuft durch eine Rückwand 1, eine Decke 2, einen Boden 3 und eine horizontale Zwischenwand 4 des Gehäuses, die einen Kühlraum 5 im oberen Teil des Gehäuses von einem Gefrierraum 6 im unteren Teil trennt. An der Rückseite des Gehäuses ist in Höhe des Bodens 3 ein Maschinenraum 7 ausgespart, der vorgesehen ist, um beim fertig zusammengebauten Gerät Teile der Kältemaschine aufzunehmen. In den Maschinenraum 7 mündet auch eine Einlassöffnung 8 des Gehäuses, die vorgesehen ist, um durch sie hindurch einen an sich bekannten Schaumbildner wie etwa ein Polyurethangemisch einzuspritzen. Eine Einspritzdüse 9 mit einem Mischkopf 10, der über steuerbare Ventile 11 mit den Komponenten des Gemischs versorgt wird, ist in den Maschinenraum 7 eingreifend, vor der Einlassöffnung 8 gezeigt.

Zum Ausschäumen des Gehäuses wird der Mischkopf 10 unmittelbar an der Einlassöffnung 8 diese abdichtend platziert, wie in Fig. 2 gezeigt. An den Ventilen 11 wird eine hohe Durchlassrate eingestellt, so dass das Polyurethangemisch mit hoher Geschwindigkeit aus der Einspritzdüse 9 austritt und auf einem als strichpunktierte Kurve dargestellten Weg bis zu einem Auftreffpunkt 12 in Höhe der Decke 2 des Gehäuses fliegt.

Ausgehend von dem Auftreffpunkt 12 beginnt das Gemisch, sich in dem Gehäuse auszubreiten, wobei ständig von der Einspritzdüse nachgeliefertes Gemisch einer Ausbreitung des Schaums entlang der Rückwand 1 zunächst entgegenwirkt und die Ausbreitung in die Decke 2 hinein begünstigt. Fig. 3 zeigt die Grenzen des ausgeschäumten Bereichs, wobei eine gestrichelte Grenzlinie dem Verlauf der Schaumfront 13 in außerhalb der Schnittebene liegenden Seitenwänden des Gehäuses entspricht.

Im Stadium der Fig. 3 ist die Austrittsgeschwindigkeit des Gemischs an der Einspritzdüse 9 bereits reduziert, so dass sich ein Auftreffpunkt 14 an einer Außenseite der Rückwand 1 zu Füssen der Schaumfront 13 ergibt. Der frisch eingespritzte Schaumbildner wird so im Wesentlichen vor dem bereits expandierten Schaum abgelagert, wodurch die Oberfläche der vorrückenden Schaumfront 13 fortlaufend erneuert wird und teilweise ausgehärtetes Material im Innern des wachsenden Schaumkörpers verschwindet.

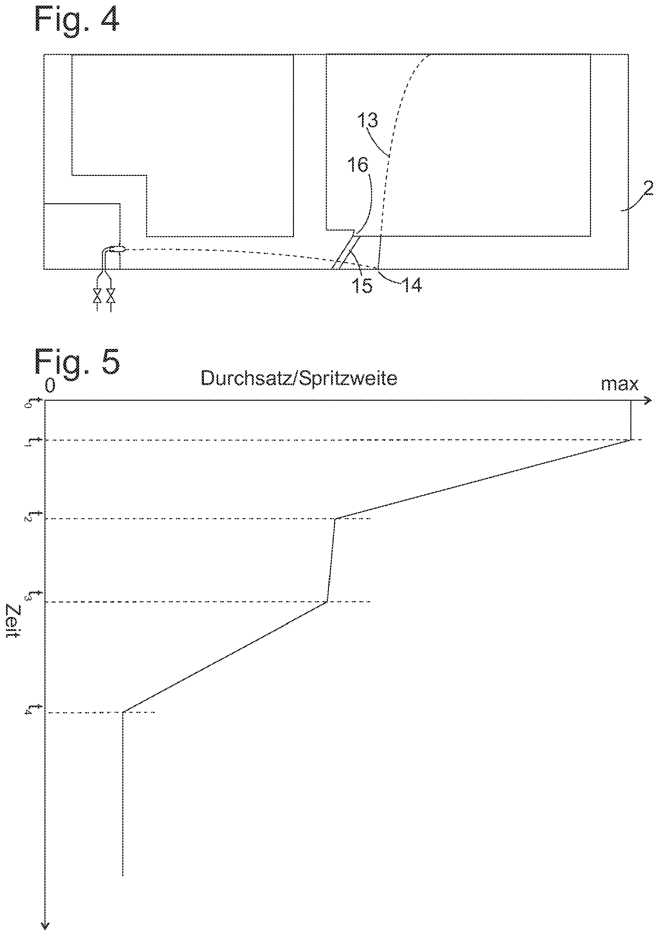

Nach kurzer Zeit ist die Decke 2, wie in Fig. 4 gezeigt, komplett von dem Schaum ausgefüllt, und die Schaumfront nähert sich der Zwischenwand 4 und einem Kondenswasserabflussrohr 15, das sich in an sich bekannter Weise von einer Sammelrinne 16 an der Rückseite des Kühlraums 5 durch die Rückwand 1 hindurch ins Freie erstreckt. Indem die Einspritzgeschwindigkeit des Schaumbildners in diesem Stadium kontinuierlich reduziert wird, so dass der Auftreffpunkt 14 zu Füssen der Schaumfront 13 kontinuierlich vorrückt und schließlich das Rohr 15 passiert, wird vermieden, dass das Abflussrohr 15 von zur Einlassöffnung 8 hin vorrückendem Schaum umflossen werden muss; statt dessen wird, sobald die Schaumfront das Rohr 15 erreicht, frischer Schaumbildner vor dem Rohr 15 abgelagert. So ist eine lunkerfreie Einbettung des Abflussrohrs 15 in den Schaum gewährleistet.

Zur weiteren Erläuterung des Verlaufs des Einspritzvorgangs wird auf Fig. 5 Bezug genommen, die den Materialdurchsatz der Einspritzdüse 9 bzw. ihre Spritzweite in willkürlichen Einheiten als Funktion der Zeit darstellt. Eine Phase maximaler Spritzweite von t₀ bis t₁ entspricht dem Ausschäumen der Decke 2. Eine sich anschließende Phase mit kontinuierlich abnehmender Spritzweite, von t₁ bis t₂, entspricht dem Vorrücken der Schaumfront 13 rings um den Kühlraum 5 auf die Zwischenwand 4 zu.

Wenn die Schaumfront zur Zeit t₂ die Zwischenwand 4 erreicht, wird die Rate, mit der die Spritzweite reduziert wird, deutlich verringert; sie könnte für die Zeitspanne [t₂, t₃], die benötigt wird, um den zum Ausfüllen der Zwischenwand 4 benötigten Schaumbildner einzuspritzen, auch auf Null gesetzt werden. Obwohl das Volumen der Zwischenwand 4 hier ähnlich dem der Decke 2 ist, ist die Zeitspanne [t₂, t₃] deutlich länger als die Zeitspanne [t₀, t₁], weil der Durchsatz der Einspritzdüse 9 zur Zeit [t₂, t₃] deutlich geringer ist.

Ab dem Zeitpunkt t₃ nimmt die Spritzweite wieder deutlich ab, allerdings langsamer als im Zeitintervall [t₁, t₂], da die pro Mengeneinheit des Schaumbildners benötigte Einspritzzeit ebenfalls verlängert ist.

Der Einspritzvorgang schließt ab mit einer Phase des Einspritzens bei niedrigerer Geschwindigkeit ab dem Zeitpunkt t₄, in der das zum Ausfüllen des Bodens 3 und der Wände des Maschinenraums 7 benötigte Material eingespritzt wird.

Gemäß dem in Fig. 5 dargestellten Ablauf nimmt die Einspritzgeschwindigkeit bzw. der Durchsatz der Einspritzdüse 9 stetig ab. Selbstverständlich könnte ein solcher Verlauf auch durch eine Stufenfunktion approximiert werden, bei der der Durchsatz bzw. die Spritzweite eine Mehrzahl von diskreten Werten annehmen kann.

Obwohl der Durchsatz der Einspritzdüse 9 im Laufe eines Einspritzvorgangs immer geringer wird, benötigt das erfindungsgemäße Verfahren nicht notwendigerweise mehr Zeit als ein Einspritzen mit konstantem Durchsatz, da zu Beginn des Einspritzvorgangs deutlich höhere Einspritzgeschwindigkeiten als bei einem herkömmlichen Verfahren mit konstanter Einspritzgeschwindigkeit eingesetzt werden können. So wird mit dem erfindungsgemäßen Verfahren eine Isolationsschicht von hoher Qualität zuverlässig und in kurzer Zeit erhalten.

## Patentansprüche

1. Verfahren zum Ausschäumen eines Hohlkörpers, insbesondere eines Haushaltskältegerätegehäuses, mit den Schritten:
a) Platzieren einer Einspritzdüse (9) an einer Einlassöffnung (8) des Hohlkörpers;
b) Einspritzen eines Schaumbildners in den Hohlkörper mit Hilfe der Einspritzdüse (9), wobei die Flugweite des Schaumbildners von der Einspritzdüse (9) bis zu einem Auftreffpunkt (12, 14) an einer Innenwand des Hohlkörpers während des Einspritzvorgangs reduziert wird; und
c) Expandierenlassen des eingespritzten Schaumbildners;
**dadurch gekennzeichnet, dass**
zum Reduzieren der Flugweite des Schaumbildners dessen Austrittsgeschwindigkeit an der Einspritzdüse (9) reduziert wird.

2. Verfahren nach Anspruch 1, **dadurch gekennzeichnet, dass** der Druck des aus der Einspritzdüse auftretenden Schaumbildners zumindest weitgehend konstant ist.

3. Verfahren nach Anspruch 1 oder 2, **dadurch gekennzeichnet, dass** der Öffnungsquerschnitt der Einspritzdüse (9) während des Einspritzvorganges des Schaumbildners variierbar ist.

4. Verfahren nach Anspruch 3, **dadurch gekennzeichnet, dass** die Einspritzdüse (9) als federbelastete Düse ausgebildet ist.

5. Verfahren nach einem der Ansprüche 1 bis 4, **dadurch gekennzeichnet, dass** an einem Auftreffpunkt (14), in dessen Umgebung ein auszuschäumender Querschnitt des Hohlraums klein ist, die Rate, mit der die Flugweite verringert wird, größer ist als an einem Auftreffpunkt (12), in dessen Umgebung sich ein großer auszuschäumender Querschnitt befindet.

6. Verfahren nach einem der Ansprüche 1 bis 5, **dadurch gekennzeichnet, dass** der Hohlkörper einen in Flugrichtung des Schaumbildners langgestreckten ersten Teilraum (1) und wenigstens einen in den ersten Teilraum einmündenden, quer zur Flugrichtung ausgedehnten zweiten Teilraum (2, 3, 4) aufweist, und dass die Rate, mit der die Flugweite verringert wird, bei einem in Höhe des zweiten Teilraums (2, 3, 4) liegenden Auftreffpunkt niedriger ist als an einem nicht in Höhe des zweiten Teilraums liegenden Auftreffpunkt.

7. Verfahren nach einem der Ansprüche 1 bis 6, **dadurch gekennzeichnet, dass** der Hohlkörper eine innere Engstelle (15) aufweist und dass der Auftreffpunkt (14) in einer Anfangsphase des Schritts b) jenseits der Engstelle (15) und in einer Endphase des Schritts b) zwischen der Engstelle (15) und der Einlassöffnung (8) liegt.

8. Verfahren nach einem der Ansprüche 1 bis 7, **dadurch gekennzeichnet, dass** der Auftreffpunkt (14) vor einer Front (13) des in dem Hohlkörper expandierenden Schaums gehalten wird.

## Claims

1. Method for foaming a hollow body, in particular a household refrigerator housing, comprising the steps of:
a) placing an injection nozzle (9) at an inlet opening (8) of the hollow body;
b) injecting a foaming agent into the hollow body using the injection nozzle (9), wherein the spraying range of the foaming agent from the injection nozzle (9) is reduced during the injection process up to an impact point (12, 14) on an inner wall of the hollow body; and
c) allowing the injected foaming agent to expand;
**characterised in that**
to reduce the spraying range of the foaming agent its exit velocity at the injection nozzle (9) is reduced.

2. Method according to claim 1, **characterised in that** the pressure of the foaming agent emerging from the injection nozzle is at least substantially constant.

3. Method according to claims 1 or 2, **characterised in that** the opening cross-section of the injection nozzle (9) can be varied during the injection process of the foaming agent.

4. Method according to claim 3, **characterised in that** the injection nozzle (9) is designed as a spring-loaded nozzle.

5. Method according to one of claims 1 to 4, **characterised in that** at an impact point (14) in the vicinity of which a cross-section of the cavity to be foamed is small, the rate at which the spraying range is reduced is greater than at an impact point (12) in the vicinity of which there is a large cross-section to be foamed.

6. Method according to one of claims 1 to 5, **characterised in that** the hollow body has a first subspace (1) elongated in the direction of spray of the foaming agent and at least one second subspace (2, 3, 4) opening into the first subspace and extended transversely to the direction of spray, and that the rate at which the spray range is reduced is lower at an impact point lying at the level of the second subspace (2, 3, 4) than at an impact point not lying at the level of the second subspace.

7. Method according to one of claims 1 to 6, **characterised in that** the hollow body has an inner constriction (15) and that the impact point (14) in an initial phase of step b) lies beyond the constriction (15) and in an end phase of step b) lies between the constriction (15) and the inlet opening (8).

8. Method according to one of claims 1 to 7, **characterised in that** the impact point (14) is held in front of a front (13) of the foam expanding in the hollow body.

## Revendications

1. Procédé de remplissage de mousse d'un corps creux, en particulier d'un corps d'appareil frigorifique électroménager, comportant les étapes suivantes:
a) placement d'une buse d'injection (9) à l'orifice d'entrée (8) du corps creux;
b) injection d'un agent moussant dans le corps creux à l'aide de la buse d'injection (9), la portée de l'agent moussant se réduisant pendant le processus d'injection de la buse d'injection (9) à un point de rencontre (12, 14) sur une paroi intérieure du corps creux; et
c) durée d'expansion de l'agent moussant injecté;
**caractérisé en ce que**
pour réduire la portée de l'agent moussant, la vitesse de sortie de celui-ci étant réduite à la buse d'injection (9).

2. Procédé selon la revendication 1, **caractérisé en ce que** la pression de l'agent moussant à l'entrée de la buse d'injection est au moins largement constante.

3. Procédé selon la revendication 1 ou 2, **caractérisé en ce que** la section d'ouverture de la buse d'injection (9) peut varier pendant le processus d'injection de l'agent moussant.

4. Procédé selon la revendication 3, **caractérisé en ce que** la buse d'injection (9) est réalisée comme une buse contrainte par un ressort.

5. Procédé selon l'une des revendications 1 à 4, **caractérisé en ce qu'**à un point de rencontre (14), autour duquel une section à remplir de mousse du corps est petite, le taux auquel la portée se réduit, est plus grand qu'en un point de rencontre (12) autour duquel se trouve une section à remplir de mousse plus grande.

6. Procédé selon l'une des revendications 1 à 5, **caractérisé en ce que** le corps creux présente une première partie d'espace (1) allongée dans le sens de vol de l'agent moussant, et au moins une deuxième partie d'espace (2, 3, 4) étendue transversalement au sens de vol et débouchant dans la première partie d'espace, et **en ce que** le taux auquel la portée diminue, pour un point de rencontre situé à hauteur de la deuxième partie d'espace (2, 3, 4), est plus faible qu'en un point de rencontre qui n'est pas situé à hauteur de la deuxième partie d'espace.

7. Procédé selon l'une des revendications 1 à 6, **caractérisé en ce que** le corps creux présente un point étroit (15) interne et **en ce que** le point de rencontre (14) se situe dans une phase naissante de l'étape b) de chaque côté du point étroit (15) et dans une phase terminale de l'étape b) entre le point étroit (15) et l'orifice d'admission (8).

8. Procédé selon l'une des revendications 1 à 7, **caractérisé en ce que** le point de rencontre (14) est maintenu devant un côté frontal (13) de la mousse en expansion dans le corps creux.
